# EUROPÄISCHE PATENTANMELDUNG

(11) **EP 4 495 034 A1**
(43) Veröffentlichungstag der Anmeldung: **22.01.2025**
(21) Anmeldenummer: 24169573.3
(22) Anmeldetag: 11.04.2024
(51) Int. Cl.: B65G 47/244, B65G 47/86, B65G 29/02, B65B 65/00

(54) **VORRICHTUNG, SYSTEM UND VERFAHREN ZUR ZUFÜHRUNG BZW. VERPACKUNG KLEINSTÜCKIGER PRODUKTE**

(30) Priorität: 21.07.2023 DE 102023119328
(71) Anmelder: Theegarten-Pactec GmbH & Co. KG, 01237 Dresden (DE)
(72) Erfinder: Ehlert, Sebastian, 01237 Dresden (DE); Richter, Robin, 01737 Fördergersdorf (DE)
(74) Vertreter: Grünecker Patent- und Rechtsanwälte PartG mbB

(57) **Zusammenfassung**

Die vorliegende Erfindung betrifft eine Vorrichtung und ein Verfahren zur Zuführung kleinstückiger Produkte (P) an eine nachgelagerte Verarbeitungseinrichtung, insbesondere Verpackungseinrichtung, sowie ein System und Verfahren zur Verpackung kleinstückiger Produkte (P).

Das erfindungsgemäße Verfahren umfasst die Schritte:
Bewegen der Produkte (P) entlang einer Bewegungsbahn unter Bildung eines Produktstaus entlang der Bewegungsbahn;
Abfördern einer Produktgruppe (G) entlang der Bewegungsbahn, wobei die Produktgruppe (G) wenigstens zwei Produkte (P) umfasst, die entlang einer entlang der Bewegungsbahn ausgerichteten Stapelachse (X) gestapelt sind;
Fördern der Produktgruppe (G) entlang der Bewegungsbahn unter Drehung der Produktgruppe (G) um eine zur Bewegungsbahn senkrechte Achse; und
Bereitstellen der Produktgruppe (G) an einer Übergabeposition für die nachgelagerte Verarbeitungseinrichtung, wobei die Stapelachse (X) der Produktgruppe (G) an der Übergabeposition senkrecht zur Bewegungsbahn ausgerichtet ist

## Beschreibung

Die vorliegende Erfindung betrifft eine Vorrichtung und ein Verfahren zur Zuführung kleinstückiger Produkte, wie Brühtabletten, Süßwaren oder Waschmitteltabs, an eine nachgelagerte Verarbeitungseinrichtung, insbesondere Verpackungseinrichtung, sowie ein System und Verfahren zur Verpackung kleinstückiger Produkte, wie Brühtabletten, Süßwaren oder Waschmitteltabs.

Kleinstückige Produkte im Sinne der vorliegenden Erfindung sind beispielsweise Produkte aus dem Lebensmittelsektor, wie Brühwürfel und -tabletten, Süßwaren, wie z.B. Hart- oder Weichkaramellen, Pralinen, Schokoladenstücke oder dergleichen, aber auch Spülmaschinen- oder Waschmitteltabs.

Im Bereich der Zuführung und Verpackung kleinstückiger Produkte ist es bekannt, die zu verpackenden Produkte im Rahmen von Mehrfachverpackungen zu verpacken. Hierzu wird eine Produktgruppe aus zwei oder mehr Produkten gebildet, die gemeinsam in derselben Verpackung verpackt werden. Beispielsweise werden insbesondere im Bereich der Verpackung von Brühblöcken sogenannte Doppelwürfelverpackungen gebildet. Zu diesem Zweck werden die Produkte einer Verpackungseinrichtung als Doppelwürfel bereitgestellt.

Bekannte Lösungen zur ein- oder mehrbahnigen Zuführung und Bereitstellung von Doppelwürfeln sind beispielsweise in der WO 2020 026184 A1 und WO 2022 009033 A1 offenbart. In diesen bisherigen Lösungen werden die einzelnen Produkte innerhalb einer Zuführstrecke auf mehreren Zuführspuren gestaut und elektronisch (beispielsweise mittels unterschiedlicher Zuführbandgeschwindigkeiten oder Reibrädern) oder mechanisch (beispielsweise mittels Indexrad) vereinzelt. Anschließend werden mithilfe von Mitnehmern in den entstandenen Lücken je zwei nebeneinander angeordnete Produkte miteinander synchronisiert und mittels zulaufender Führungsschienen zu einem Doppelwürfel zusammengeführt. Dieser wird anschließend von einer Verpackungseinrichtung übernommen und verpackt.

Hierzu ist jedoch für jedes einzelne Produkt aus der Doppelwürfelverpackung eine eigenständige Zuführspur inklusive Führungselementen, Sensoren und Vereinzelungstechnik bereitzustellen. D.h., für jede Verpackungsbahn einer mehrbahnigen Verpackungsmaschine muss eine Anzahl an Zuführspuren bereitgestellt werden, die der Anzahl der Produkte entspricht, die in einer Mehrfachverpackung gemeinsam verpackt werden. Im Falle einer zweibahnigen Verpackungsmaschine, in der Doppelwürfel parallel auf zwei Bahnen verpackt werden, werden somit vier Spuren benötigt. Dies führt zu einem signifikant erhöhten technischen Aufwand sowie einer erhöhten Störanfälligkeit der gesamten Verpackungsanlage mit zunehmender Anzahl an Zuführspuren, da für gewöhnlich bei einer Störung auf einer Spur die gesamte Anlage gestoppt werden muss.

Darüber hinaus führen die bisherigen Ansätze zur Vereinzelung der Produkte (beispielsweise Indexräder oder Mitnehmer) zu einer hohen mechanischen Produktbelastung. Insbesondere bei Brühwürfeln, die in der Regel empfindliche poröse Artikel sind, besteht die Gefahr einer Beschädigung, die schnell zu einer Verunreinigung der gesamten Anlage führen kann. Bei Erhöhung der Verpackungsleistung und der dazu notwendigen Erhöhung der Zuführgeschwindigkeit stoßen bekannte Lösungsansätze ferner an ihre physikalischen Grenzen, wenn beispielsweise Schlupf aufgrund unzureichender Reibwerte bei elektronischer Vereinzelung auftritt.

Der bestehenden Nachfrage nach einer Erhöhung der Zuführ- und Verpackungsleistung, beispielsweise auf eine Zuführleistung von bis zu 1500 Doppelwürfel pro Minute je Verpackungsbahn, sind mit den bisherigen Lösungen wirtschaftliche und physikalische Grenzen gesetzt.

Der vorliegenden Erfindung liegt daher die Aufgabe zugrunde, ein Verfahren und eine Vorrichtung zur Zuführung kleinstückiger Produkte an eine nachgelagerte Verarbeitungseinrichtung, insbesondere Verpackungseinrichtung, sowie ein Verfahren und System zur Verpackung kleinstückiger Produkte bereitzustellen, um den dafür notwendigen mechanischen Aufwand zu verringern und gleichzeitig eine schonende Produkthandhabung zu gewährleisten.

Diese Aufgabe wird erfindungsgemäß durch die Merkmale der unabhängigen Ansprüche gelöst. Bevorzugte Ausgestaltungen der Erfindung sind Gegenstand der Unteransprüche.

Ein erfindungsgemäßes Verfahren zur Zuführung kleinstückiger Produkte, wie Brühtabletten, Süßwaren oder Waschmitteltabs, an eine nachgelagerte Verarbeitungseinrichtung, insbesondere Verpackungseinrichtung, umfasst die Schritte:
- Bewegen der Produkte entlang einer Bewegungsbahn unter Bildung eines Produktstaus entlang der Bewegungsbahn;
- Abfördern einer Produktgruppe entlang der Bewegungsbahn, wobei die Produktgruppe wenigstens zwei Produkte umfasst, die entlang einer entlang der Bewegungsbahn ausgerichteten Stapelachse gestapelt sind;
- Fördern der Produktgruppe entlang der Bewegungsbahn unter Drehung der Produktgruppe um eine zur Bewegungsbahn senkrechte Achse; und
- Bereitstellen der Produktgruppe an einer Übergabeposition für die nachgelagerte Verarbeitungseinrichtung, wobei die Stapelachse der Produktgruppe an der Übergabeposition senkrecht zur Bewegungsbahn ausgerichtet ist.

Erfindungsgemäß werden die einzelnen Produkte zunächst entlang einer Bewegungsbahn gestaut, insbesondere so, dass sie, in Richtung der Bewegungsbahn gesehen, hintereinander in direkter Anlage angeordnet sind. Aus diesem Zustand werden zwei oder mehr Produkte gemeinsam abgefördert, wodurch eine Produktgruppe gebildet wird, die zwei oder mehr Produkte umfasst. Bei der Abförderung befinden sich die Produkte der Produktgruppe aufgrund des vorab gebildeten Produktstaus in einem gestapelten Zustand, in welchem sie entlang der Bewegungsbahn angeordnet, d.h. gestapelt sind. Mit anderen Worten ist die Stapelachse der Produkte, die sich innerhalb der Produktgruppe befinden, bei der Abförderung entlang der Bewegungsbahn ausgerichtet und verläuft parallel dazu. Im weiteren Verlauf der Förderung der Produktgruppe entlang der Bewegungsbahn wird die Produktgruppe um eine Achse gedreht, die senkrecht zur Bewegungsbahn ist, insbesondere senkrecht auf der Bewegungsbahn steht. Dadurch wird die Ausrichtung der Stapelachse der Produktgruppe bezüglich der Bewegungsbahn geändert. Die Drehung erfolgt dabei um ein Maß, durch welches die Stapelachse bei Bereitstellung der Produktgruppe an einer Übergabeposition für die nachgelagerte Verarbeitungseinrichtung senkrecht zur Bewegungsbahnen ausgerichtet ist.

Dadurch werden gemeinsam entnommenen Produkte (die Produkte einer Produktgruppe) um einen Winkel von insbesondere 90° um die zur Bewegungsbahn senkrechte Achse gedreht, insbesondere so, dass die gemeinsam entnommenen Produkte, die vor der Drehung bezüglich der Bewegungsbahn hintereinander, insbesondere lückenlos hintereinander, angeordnet sind, nach der Drehung bezüglich der Bewegungsbahn nebeneinander, insbesondere lückenlos nebeneinander, angeordnet sind.

Die vorliegende Erfindung ermöglicht es damit, eine Mehrfachproduktzuführung (beispielsweise eine Doppelwürfel-, Dreifachwürfel- oder Vierfachwürfelzuführung) bereitzustellen, die lediglich eine Zuführspur benötigt. Dadurch kann die Anzahl der benötigten Zuführspuren unabhängig der Anzahl der Produkte einer Mehrfachverpackung auf eine Spur je Verpackungsbahn reduziert werden. Dies führt zu einer signifikant verringerten Anzahl der benötigten Anlagenbestandteile und dadurch zu einem verringerten mechanischen Aufwand und einer reduzierten Störanfälligkeit.

Dennoch können die Produkte in einem bezüglich der Bewegungsbahn nebeneinander angeordneten Zustand (Ausrichtung/Orientierung) an einer Übergabeposition bereitgestellt werden, der dem der bisher bekannten Lösungen entspricht. Daher kann die vorliegende Erfindung unter anderem problemlos in die Zuführung zu bestehenden Verpackungseinrichtungen integriert werden.

Des Weiteren erübrigen sich mechanische Anschläge, Indexräder etc., die im Stand der Technik zur Vereinzelung, Ausrichtung, Synchronisierung und Zusammenführung der Produkte einer Produktgruppe benötigt werden. Dadurch wird eine schonende Produkthandhabung erreicht.

Vorzugsweise weisen die Produkte zumindest zwei flache, zueinander parallele Seiten auf. Noch bevorzugter sind die Produkte quaderförmig oder würfelförmig. Dabei sind vorzugsweise zwei der zumindest zwei flachen, zueinander parallelen Seiten bei der Bildung des Produktstaus in, bzw. entgegen der Bewegungsbahn ausgerichtet.

Diese Produktform und Anordnung im Produktstau ist besonders vorteilhaft bei der Handhabung der Produktgruppe während der Abförderung, Förderung und Drehung, da die flachen Seiten benachbarter Produkte vollflächig in direkter Anlage aneinander anliegen können. So wird ein Verrutschen der Position der Produkte untereinander während der Handhabung verhindert. Dies gewährleistet eine korrekte Positionierung und Ausrichtung der Produktgruppe bei Bereitstellung an der Übergabeposition. Zudem liegen bei Bereitstellung zwei flache und zueinander parallele Seiten des Stapels frei, der die Produktgruppe bildet. Daher kann die Produktgruppe von der nachgelagerten Verarbeitungsrichtung über die Stapelachse an den flachen Seiten gegriffen werden. Dies verringert weiter die Gefahr einer Produktbeschädigung bei Bereitstellung der Produktgruppe.

Weiter vorzugsweise werden die Produkte einer Produktgruppe kontinuierlich abgefördert, gefördert und bereitgestellt. Noch bevorzugter werden die Produkte während der Abförderung, Förderung und Bereitstellung lückenlos in gemeinsamer Anlage gehalten.

Dies begünstigt eine Integration der erfindungsgemäßen Zuführung in bestehende Verpackungslinien, die nach dem kontinuierlichen Prinzip arbeiten. Zudem wird durch die kontinuierliche Förderung eine ruckartige Handhabung der Produkte vermieden und eine schonende Produkthandhabung ermöglicht. Durch die Abförderung, Förderung und Bereitstellung lückenlos in gemeinsamer Anlage gehaltener Produkte ergibt sich eine gleichmäßige Kraftverteilung bei Handhabung und Bereitstellung der Produkte durch den gesamten Stapel hindurch, der die Produktgruppe bildet.

Des Weiteren verläuft die Stapelachse der Produktgruppe an der Übergabeposition vorzugsweise horizontal. Dies erleichtert die Einbindung und Synchronisierung in bereits existierende Verpackungslinien.

Weiter bevorzugt verläuft die Bewegungsbahn zumindest abschnittsweise kreisförmig. Noch bevorzugter umfasst die Bewegungsbahn stetig ineinander übergehende Teilkreise. Dadurch können die Produkte, bzw. die Produktgruppe entlang von Kreisbahnen bewegt werden, was eine platzsparende und produktschonende Handhabung, beispielsweise mittels Rotationskopf, zulässt.

Weiter vorzugsweise wird die Produktgruppe mittels eines linearen Transportsystems und/oder eines Rotationskopfs abgefördert, gefördert und/oder bereitgestellt. Ein lineares Transportsystem, beispielsweise ein linearer Mover, kann beispielsweise aus den gestauten Produkten zwei oder mehr Produkte gemeinsam zur Bildung einer Produktgruppe abfördern, drehen und wieder absetzen. Ein Rotationskopf kann beispielsweis aus den gestauten Produkten zwei oder mehr Produkte gemeinsam zur Bildung einer Produktgruppe abfördern und drehen oder zur Drehung an einen weiteren Rotationskopf übergeben. Dadurch wird eine platzsparende und problemlose Integrierung in bestehende Verpackungsanlagen ermöglicht, die nach dem kontinuierlichen Prinzip arbeiten.

Ein erfindungsgemäßes Verfahren zur Verpackung kleinstückiger Produkte, wie Brühtabletten, Süßwaren oder Waschmitteltabs, umfasst die Schritte:
- Zuführen der Produkte an eine nachgelagerte Verpackungseinrichtung unter Durchführung des Verfahrens wie vorangehend beschrieben;
- Abfördern der an der Übergabeposition bereitgestellten Produktgruppe mittels der nachgelagerten Verpackungseinrichtung; und
- Verpacken der Produktgruppe, insbesondere unter Bildung eines Packmittelschlauchs um die Produktgruppe.
Dadurch können die bereits voranstehend beschriebenen Wirkungen erzielt werden.

Eine erfindungsgemäße Vorrichtung zur Zuführung kleinstückiger Produkte, wie Brühtabletten, Süßwaren oder Waschmitteltabs, an eine nachgelagerte Verarbeitungseinrichtung, insbesondere Verpackungseinrichtung, umfasst:
- eine Fördereinrichtung zur Bewegung der Produkte entlang einer Bewegungsbahn unter Bildung eines Produktstaus entlang der Bewegungsbahn;
- eine Entnahmeeinrichtung zur Abförderung einer Produktgruppe entlang der Bewegungsbahn, wobei die Produktgruppe wenigstens zwei Produkte umfasst, die entlang einer entlang der Bewegungsbahn ausgerichteten Stapelachse gestapelt sind;
- eine Dreheinrichtung zur Förderung der Produktgruppe entlang der Bewegungsbahn unter Drehung der Produktgruppe um eine zur Bewegungsbahn senkrechte Achse und Bereitstellung der Produktgruppe an einer Übergabeposition für die nachgelagerte Verarbeitungseinrichtung, so dass die Stapelachse der Produktgruppe senkrecht zur Bewegungsbahn ausgerichtet ist.
Die erfindungsgemäße Vorrichtung ist vorzugsweise eingerichtet, das Verfahren nach einem der vorangehend beschriebenen Aspekte durchzuführen.

Dadurch können die bereits voranstehend, in Bezug auf das erfindungsgemäße Verfahren beschriebenen Wirkungen erzielt werden.

Vorzugsweise umfassen die Entnahmeeinrichtung und die Dreheinrichtung ein lineares Transportsystem und/oder zumindest einen Rotationskopf. Noch bevorzugter dreht sich der mindestens eine Rotationskopf um eine horizontal angeordnete Achse. Wie voranstehend ausgeführt, kann dadurch eine platzsparende und problemlose Integrierung in bestehende Verpackungsanlagen ermöglicht werden, die insbesondere nach dem kontinuierlichen Prinzip arbeiten und die Produktgruppen beispielsweise mittels Rotationsköpfen verpacken, die sich um horizontal angeordnete Achsen drehen.

Weiter vorzugsweise umfasst die Entnahmeeinrichtung Entnahmeorgane, vorzugsweise Greifer oder Greiferbackenpaare, die eingerichtet sind, um jeweils zwei oder mehr Produkte gemeinsam abzufördern, wobei die Entnahmeorgane vorzugsweise an einem Entnahme-Rotationskopf angeordnet sind. Durch Greifer oder Greiferbackenpaare können die Produkte auf einfache Weise gemeinsam aus dem Produktstau abgefördert werden. So ist ein einziges Greiferpackenpaar ausreichend, um sämtliche Produkte einer Produktgruppe gemeinsam abzufördern, womit es nicht notwendig ist, für jedes Produkt aus einer Produktgruppe ein eigenes Arbeitsorgan zur Abförderung der Produktgruppe bereitzustellen.

Vorzugsweise sind die Entnahmeorgane, insbesondere Greifer oder Greiferbackenpaare, eingerichtet, um jeweils zwei oder mehr Produkte gemeinsam unter Kompensation der jeweiligen Maßtoleranz der Produkte abzufördern. Unter Kompensation der Maßtoleranz ist insbesondere die Kompensation der Unterschiede der jeweiligen Produktabmessungen jeweils in Greifrichtung gesehen zu verstehen. Dies ist beispielsweise die Breitenabmessung der Produkte, senkrecht zur Bewegungsbahn und parallel zur Förderebene der Einzelprodukte im Produktstau gesehen. Zu diesem Zweck können die Flächen der Entnahmeorgane/Greifer/Greiferbackenpaare beispielsweise ein elastisches Material und/oder ein Federsystem umfassen, sodass alle Produkte einer Produktgruppe sicher gegriffen und abgefördert werden können. Dies ist insbesondere bei der Abförderung druckempfindlicher Produkte, wie Brühwürfeln, vorteilhaft.

Der Entnahme-Rotationskopf ist vorzugsweise eingerichtet, sich um eine horizontal verlaufende Achse zu drehen.

Weiter wird bevorzugt, dass die Dreheinrichtung Drehorgane, vorzugsweise Greifer oder Greiferbackenpaare, umfasst, die eingerichtet sind, um jeweils die Produkte der Produktgruppe gemeinsam um die zur Bewegungsbahn senkrechte Achse zu drehen und der nachgelagerten Verarbeitungseinrichtung bereitzustellen, wobei die Drehorgane vorzugsweise an einem Dreh-Rotationskopf angeordnet sind. Ähnlich wie im Falle der Entnahmeorgane können die Drehorgane, insbesondere Greifer oder Greiferbackenpaare, eingerichtet sein, um Maßtoleranzen der Produkte einer Produktgruppe zu kompensieren. Der Dreh-Rotationskopf ist vorzugsweise eingerichtet, sich um eine horizontal verlaufende Achse zu drehen. Es ergeben sich die gleichen Vorteile, wie sie bezüglich der Entnahmeeinrichtung voranstehend beschrieben sind.

Ein erfindungsgemäßes System zur Verpackung kleinstückiger Produkte, wie Brühtabletten, Süßwaren oder Waschmitteltabs umfasst:
- die erfindungsgemäße Vorrichtung gemäß einem der vorangehend beschriebenen Aspekte;
- die nachgelagerte Verpackungseinrichtung zur Abförderung der an der Übergabeposition bereitgestellten Produktgruppe und zur Verpackung der Produktgruppe, insbesondere unter Bildung eines Packmittelschlauchs um die Produktgruppe.
Insbesondere ist das erfindungsgemäße System eingerichtet, das oben beschriebene erfindungsgemäße Verpackungsverfahren durchzuführen.

Es ergeben sich die gleichen Vorteile, wie sie voranstehend bezüglich der erfindungsgemäßen Vorrichtung und des erfindungsgemäßen Verfahrens beschrieben werden.

### Begriffe und Definitionen

Der Begriff kleinstückige Produkte erstreckt sich insbesondere auf Süßwaren wie Schokoladenstücke, Zuckerwürfel, Kakaowürfel, Toffees oder Pralinen, Hart- oder Weichkaramellen wie Bonbons oder Kaubonbons, aber auch auf Brüherzeugnisse wie Brühblöcke, Brühtabletten oder Brühwürfel sowie auf Wasch- oder Spülmaschinentabs.

Mit der Verarbeitung von Produkten ist insbesondere die Verpackung der Produkte gemeint.

### Kurze Beschreibung der Figuren

Fig. 1 zeigt eine perspektivische schematische Darstellung einer erfindungsgemäßen Vorrichtung, die zur Durchführung des erfindungsgemäßen Verfahrens ausgebildet ist.
Fig. 2 zeigt eine Prinzipskizze, bezüglich einer Bewegungsbahn in Draufsicht gesehen, zur Veranschaulichung der gemäß dem erfindungsgemäßen Verfahren durchgeführten Schritte.

### Detaillierte Beschreibung des bevorzugten Ausführungsbeispiels

Die Erfindung wird nachstehend anhand eines Ausführungsbeispiels und zugehöriger Zeichnungen näher erläutert.

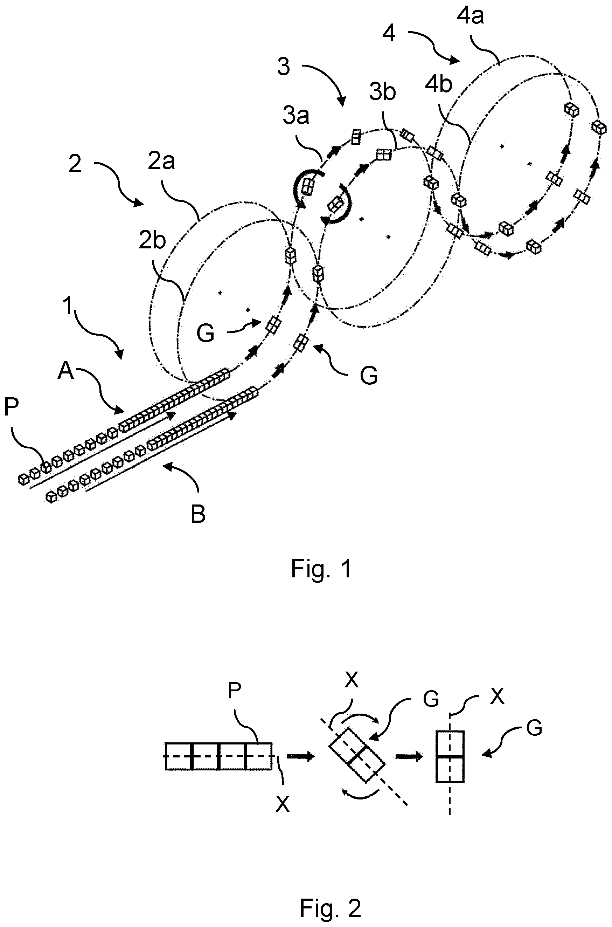

Fig. 1 zeigt eine perspektivische schematische Darstellung einer erfindungsgemäßen Vorrichtung, bzw. eines erfindungsgemäßen Systems, die zur Durchführung des erfindungsgemäßen Verfahrens ausgebildet sind.

In der beispielhaft erläuterten Ausführungsform werden Produkte P zugeführt und verpackt, die eine Würfelform aufweisen, wie beispielsweise Brühwürfel. In der dargestellten Vorrichtung werden die Produkte P auf zwei parallelen Bahnen A und B gefördert und zu einer sogenannten Doppelwürfelpackung verarbeitet. Das heißt, in jeder Verpackung befinden sich zwei gemeinsam verpackte würfelförmige Produkte P. Die Verpackung der Doppelwürfel erfolgt auf bekannte Weise, beispielsweise als Päckchenfaltung. Es kann jedoch auch jede andere Faltungsart oder Verpackungsart eingesetzt werden, insbesondere in Abhängigkeit von der Art der Produkte P.

Wie in Fig. 1 zu sehen ist, werden die einzelnen Produkte P von einer Fördereinrichtung 1 in jeder Bahn A und B entlang einer Bewegungsbahn bewegt und einer Entnahmeeinrichtung 2 zugeführt, wie durch einen jeweiligen Pfeil angezeigt ist, und gestaut. Die Zuführung kann beispielsweise auf einem Förderband erfolgen. Der Produktstau kann in bekannter Weise beispielsweise mittels unterschiedlicher Bandgeschwindigkeiten und/oder eines Anschlags erzeugt werden. Vorzugsweise wird der Produktstau durch ein vakuumunterstütztes Lochband erzeugt. Im Produktstau befinden sich die einzelnen Produkte P in lückenloser unmittelbarer Anlage miteinander. D.h., die beiden einander zugewandten Seiten zweier benachbarter Produkte P (entlang der Bewegungsbahn gesehen) befinden sich in Anlage miteinander.

Die Entnahmeeinrichtung 2 ist vorzugsweise als Entnahme-Rotationskopf ausgebildet, der beispielsweise aus zwei koaxialen Entnahmerädern 2a, 2b bestehend ausgebildet ist, an denen hier nicht dargestellte schwenkbar Entnahmeorgane zur Produktentnahme aus dem Produktstau vorgesehen sind. Die Entnahmeräder 2a, 2b sind jeweils einer der Bahnen A, B zugeordnet und unabhängig voneinander ansteuerbar. Wie in EP 2906473 A1 beschrieben, ist es aber auch möglich, die beiden Entnahmeräder 2a, 2b über einen gemeinsamen Antrieb anzusteuern, sodass die Produkte P auf beiden Bahnen A, B parallel, bzw. synchron, gehandhabt werden.

Die Entnahmeorgane können beispielsweise Greiferbackenpaare umfassen, wie sie z.B. Gegenstand der DE 10 2008 019 605 A1 sind. Die Greiferbackenpaare sind vorzugsweise schwenkbar um eigene Achsen gelagert, die parallel zur Rotationsachse der Entnahmeräder 2a, 2b verlaufen.

Zur parallelen, synchronen Handhabung der Produkte P auf beiden Bahnen A, B werden die Produkte P bei der oder durch die Bildung des Produktstaus synchronisiert, sodass sie gleichzeitig von beiden Entnahmerädern 2a, 2b aufgenommen werden können. Hierzu werden die Produkte P vorzugsweise, wie oben angemerkt, über ein vakuumunterstütztes Lochband gestaut und mit einer Gabellichtschranke und einem Servomotorje Bahn A, B der Entnahmeeinrichtung 2 zugeführt.

Eine parallele, synchrone Handhabung, bzw. Verpackung ist einerseits vorteilhaft im Hinblick auf gemeinsame Antriebsgruppen und eine Reduktion der Anlagenkomponenten, jedoch optional.

Die Entnahmeeinrichtung 2 entnimmt - je Bahn A, B - aus dem Produktstau die in Richtung der Bewegungsbahn gesehen vordersten zwei Produkte P gemeinsam und fördert sie gemeinsam entlang der Bewegungsbahn ab. Dadurch wird je Bahn A, B eine Produktgruppe G gebildet, die die beiden vordersten Produkte P umfasst. Das heißt, durch die gemeinsame Abförderung der vordersten Produkte P aus dem jeweiligen Produktstau wird eine Produktgruppe G gebildet. Die Anzahl der je Bahn A, B gemeinsam abgeförderten Produkte P entspricht der Anzahl der Produkte P, die in einer gemeinsamen Verpackung verpackt werden sollen. Im Falle einer Doppelwürfelverpackung folglich zwei Produkte P.

Durch die aufgrund des Produktstaus bedingte Anlage der Produkte P, die als Produktgruppe G abgefördert werden, sind die Produkte P entlang der Bewegungsbahn gestapelt. D.h., die Produkte P jeder Produktgruppe G bilden einen Produktstapel, dessen Stapelachse X entlang der Bewegungsbahn verläuft.

Nach einem Drehwinkel von 90°, den der Entnahme-Rotationskopf der Entnahmeeinrichtung 2 um seine horizontal verlaufende Achse beschreibt, werden die Produktgruppen G einer Dreheinrichtung 3 übergeben, bzw. von dieser übernommen.

Vorzugsweise umfasst die Dreheinrichtung 3 einen Dreh-Rotationskopf, der beispielsweise aus zwei koaxialen Drehrädern 3a, 3b bestehend ausgebildet ist und entlang deren Umfänge (nicht dargestellte) Drehorgane angeordnet sind. Die Drehräder 3a, 3b sind jeweils einer der Bahnen A, B zugeordnet und unabhängig voneinander ansteuerbar. Wie in EP 2906473 A1 beschrieben, ist es aber auch möglich, die beiden Drehräder 3a, 3b über einen gemeinsamen Antrieb anzusteuern, sodass die Produkte P auf beiden Bahnen A, B parallel, bzw. synchron, gehandhabt werden.

Ähnlich wie bei der Entnahmeeinrichtung 2 können die Drehorgane beispielsweise Greiferbackenpaare umfassen. Diese sind vorzugsweise schwenkbar/drehbar um eigene Achsen gelagert, die senkrecht zur Rotationsachse der Drehräder 3a, 3b verlaufen.

Durch die Drehräder 3a, 3b werden die Produktgruppen G - während der Förderung durch die Dreheinrichtung 3 - mittels der Drehorgane jeweils bezüglich der Bewegungsbahn gedreht. Die Drehung erfolgt um eine Achse, die senkrecht auf der Bewegungsbahn steht. D.h., die Drehachse verläuft in radialer Richtung der Drehräder 3a, 3b, sodass die Stapelachse X jeder Produktgruppe G bezüglich der Bewegungsbahn gedreht wird. Die Drehung der Stapelachse X der jeweiligen Produktgruppe G erfolgt um 90°, so dass die Stapelachse X schließlich parallel zur Rotationsachse der Dreheinrichtung 3 und senkrecht zur Bewegungsbahn verläuft. Während dieser Drehung werden die Produktgruppen G auf beiden Bahnen A, B durch den Dreh-Rotationskopf gefördert; in dem in Fig. 1 dargestellten Ausführungsbeispiel entlang eines Teilkreises um 180° um die Rotationsachse des Dreh-Rotationskopfes.

Dadurch ist die jeweilige Stapelachse X der gedrehten Produktgruppen G beider Bahnen A, B an einer Übergabeposition senkrecht zur jeweiligen Bewegungsbahn und insbesondere horizontal ausgerichtet. An der Übergabeposition werden die Produktgruppen G einer nachfolgenden Verpackungseinrichtung bereitgestellt. Als Teil einer nachfolgenden Verpackungseinrichtung ist in Fig. 1 beispielhaft eine Aufnahmeeinrichtung 4 dargestellt, die beispielsweise einen Rotationskopf bestehend aus zwei koaxialen Aufnahmerädern 4a, 4b umfasst.

Ähnlich wie bei der Entnahmeeinrichtung 2 und der Dreheinrichtung 3 umfasst die Aufnahmeeinrichtung 4 Aufnahmeorgane, die schwenkbar an den Aufnahmerädern 4a, 4b angebracht sind und eingerichtet sind, die an der Übergabeposition bereitgestellten Produktgruppen G aufzunehmen, bzw. zu übernehmen. Die Produktgruppen G werden anschließend in bekannter Weise einem Verpackungsprozess zugeführt, wie beispielsweise in der EP 2906473 A1 beschrieben.

In der voranstehenden und in Fig. 1 dargestellten Ausführungsform werden die Entnahmeeinrichtung 2 und Dreheinrichtung 3 jeweils durch einen Rotationskopf gebildet. Es ist jedoch ebenfalls möglich, dass beide Einrichtungen einen gemeinsamen Rotationskopf umfassen, durch den die Produkte P aus dem Produktstau abgefördert, gefördert und gedreht werden.

Grundsätzlich besteht der Kern der vorliegenden Erfindung in der Realisierung der Produktdrehung zweier oder mehrerer lückenlos hintereinander gestauter Produkte P zu zwei oder mehr lückenlos nebeneinander angeordneten Produkten P zur Bildung einer Mehrfachpackung. Damit bleibt die Anzahl der benötigten Produktzuführspuren immer konstant bei einer Spur pro Verpackungsbahn.

Dieses grundlegende Prinzip ist in der in Fig. 2 dargestellten Skizze veranschaulicht. Fig. 2 ist aus einem Blickwinkel in Draufsicht bezüglich der Bewegungsbahn dargestellt.

Zunächst befinden sich die Produkte P im Produktstau, sodass eine Stapelachse X der Produkte P in Richtung der Bewegungsbahn ausgerichtet ist (linke Seite in Fig. 2). Bei der Drehung der Produktgruppen G (Mitte in Fig. 2) wird die Stapelachse X bezüglich der Bewegungsbahn gedreht, sodass sie abschließend senkrecht zur Bewegungsbahn ausgerichtet ist (rechte Seite in Fig. 2).

Dieser Vorgang muss nicht zwangsläufig mit Rotationskopfes erfolgen. Es ist ebenfalls möglich, ein lineares Transportsystem, wie beispielsweise ein lineares Moversystem bereitzustellen. In diesem können durch jeweils einen Mover zwei (oder mehr) Produkte P aus dem Produktstau gegriffen, gedreht und anschließend abgelegt werden, um das erfindungsgemäße Abfördern, Fördern, Drehen und Bereitstellen zu realisieren.

### Bezugszeichenliste

- 1: Fördereinrichtung
- 2: Entnahmeeinrichtung
- 2a, 2b: Entnahmerad
- 3: Dreheinrichtung
- 3a, 3b: Drehrad
- 4: Aufnahmeeinrichtung
- 4a, 4b: Aufnahmerad
- A: Bahn
- B: Bahn
- G: Produktgruppe
- P: Produkt
- X: Stapelachse

## Patentansprüche

1. Verfahren zur Zuführung kleinstückiger Produkte (P), wie Brühtabletten, Süßwaren oder Waschmitteltabs, an eine nachgelagerte Verarbeitungseinrichtung, insbesondere Verpackungseinrichtung, umfassend die Schritte:
Bewegen der Produkte (P) entlang einer Bewegungsbahn unter Bildung eines Produktstaus entlang der Bewegungsbahn;
Abfördern einer Produktgruppe (G) entlang der Bewegungsbahn, wobei die Produktgruppe (G) wenigstens zwei Produkte (P) umfasst, die entlang einer entlang der Bewegungsbahn ausgerichteten Stapelachse (X) gestapelt sind;
Fördern der Produktgruppe (G) entlang der Bewegungsbahn unter Drehung der Produktgruppe (G) um eine zur Bewegungsbahn senkrechte Achse; und
Bereitstellen der Produktgruppe (G) an einer Übergabeposition für die nachgelagerte Verarbeitungseinrichtung, wobei die Stapelachse (X) der Produktgruppe (G) an der Übergabeposition senkrecht zur Bewegungsbahn ausgerichtet ist.

2. Verfahren nach Anspruch 1, wobei die Produkte (P) zumindest zwei flache, zueinander parallele Seiten aufweisen, vorzugsweise quaderförmig, noch bevorzugter würfelförmig sind und zwei der zumindest zwei flachen, zueinander parallelen Seiten bei der Bildung des Produktstaus in, bzw. entgegen der Bewegungsbahn ausgerichtet sind.

3. Verfahren nach einem der vorangehenden Ansprüche, wobei die Produkte (P) einer Produktgruppe (G) kontinuierlich und vorzugsweise lückenlos in gemeinsamer Anlage abgefördert, gefördert und bereitgestellt werden.

4. Verfahren nach einem der vorangehenden Ansprüche, wobei die Stapelachse (X) der Produktgruppe (G) an der Übergabeposition horizontal verläuft.

5. Verfahren nach einem der vorangehenden Ansprüche, wobei die Bewegungsbahn zumindest abschnittsweise kreisförmig verläuft, insbesondere stetig ineinander übergehende Teilkreise umfasst.

6. Verfahren nach einem der vorangehenden Ansprüche, wobei die Produktgruppe (G) mittels eines linearen Transportsystems und/oder eines Rotationskopfs abgefördert, gefördert und/oder bereitgestellt wird.

7. Verfahren zur Verpackung kleinstückiger Produkte (P), wie Brühtabletten, Süßwaren oder Waschmitteltabs, umfassend die Schritte:
Zuführen der Produkte (P) an eine nachgelagerte Verpackungseinrichtung unter Durchführung des Verfahrens nach einem der vorangehenden Ansprüche;
Abfördern der an der Übergabeposition bereitgestellten Produktgruppe (G) mittels der nachgelagerten Verpackungseinrichtung;
Verpacken der Produktgruppe (G), insbesondere unter Bildung eines Packmittelschlauchs um die Produktgruppe (G).

8. Vorrichtung zur Zuführung kleinstückiger Produkte (P), wie Brühtabletten, Süßwaren oder Waschmitteltabs, an eine nachgelagerte Verarbeitungseinrichtung, insbesondere Verpackungseinrichtung, vorzugsweise zur Durchführung des Verfahrens nach einem der Ansprüche 1 - 6, umfassend:
eine Fördereinrichtung (1) zur Bewegung der Produkte (P) entlang einer Bewegungsbahn unter Bildung eines Produktstaus entlang der Bewegungsbahn;
eine Entnahmeeinrichtung (2) zur Abförderung einer Produktgruppe (G) entlang der Bewegungsbahn, wobei die Produktgruppe (G) wenigstens zwei Produkte (P) umfasst, die entlang einer entlang der Bewegungsbahn ausgerichteten Stapelachse (X) gestapelt sind;
eine Dreheinrichtung (3) zur Förderung der Produktgruppe (G) entlang der Bewegungsbahn unter Drehung der Produktgruppe (G) um eine zur Bewegungsbahn senkrechte Achse und Bereitstellung der Produktgruppe (G) an einer Übergabeposition für die nachgelagerte Verarbeitungseinrichtung, so dass die Stapelachse (X) der Produktgruppe (G) senkrecht zur Bewegungsbahn ausgerichtet ist.

9. Vorrichtung nach Anspruch 8, wobei die Entnahmeeinrichtung (2) und die Dreheinrichtung (3) ein lineares Transportsystem und/oder zumindest einen Rotationskopf umfassen.

10. Vorrichtung nach Anspruch 8 oder 9, wobei die Entnahmeeinrichtung (2) Entnahmeorgane, vorzugsweise Greifer oder Greiferbackenpaare, umfasst, die eingerichtet sind, um jeweils zwei oder mehr Produkte (P) gemeinsam abzufördern, vorzugsweise unter Kompensation der jeweiligen Maßtoleranzen der gemeinsam abgeförderten Produkte (P), wobei die Entnahmeorgane vorzugsweise an einem Entnahme-Rotationskopf angeordnet sind.

11. Vorrichtung nach einem der Ansprüche 8 - 10, wobei die Dreheinrichtung (3) Drehorgane, vorzugsweise Greifer oder Greiferbackenpaare, umfasst, die eingerichtet sind, um jeweils die Produkte (P) der Produktgruppe (G) gemeinsam um die zur Bewegungsbahn senkrechte Achse zu drehen und der nachgelagerten Verarbeitungseinrichtung bereitzustellen, wobei die Drehorgane vorzugsweise an einem Dreh-Rotationskopf angeordnet sind.

12. System zur Verpackung kleinstückiger Produkte (P), wie Brühtabletten, Süßwaren oder Waschmitteltabs, insbesondere zur Durchführung des Verfahrens nach Anspruch 7, umfassend:
die Vorrichtung nach einem der Ansprüche 8 - 11;
die nachgelagerte Verpackungseinrichtung zur Abförderung der an der Übergabeposition bereitgestellten Produktgruppe (G) und zur Verpackung der Produktgruppe (G), insbesondere unter Bildung eines Packmittelschlauchs um die Produktgruppe (G).

## Geänderte Patentansprüche

### Geänderte Patentansprüche gemäss Regel 137(2) EPÜ.

1. Verfahren zur Zuführung kleinstückiger Produkte (P), wie Brühtabletten, Süßwaren oder Waschmitteltabs, an eine nachgelagerte Verarbeitungseinrichtung, insbesondere Verpackungseinrichtung, umfassend die Schritte:
Bewegen der Produkte (P) entlang einer Bewegungsbahn unter Bildung eines Produktstaus entlang der Bewegungsbahn;
Abfördern einer Produktgruppe (G) entlang der Bewegungsbahn, wobei die Produktgruppe (G) wenigstens zwei Produkte (P) umfasst, die entlang einer entlang der Bewegungsbahn ausgerichteten Stapelachse (X) gestapelt sind;
Fördern der Produktgruppe (G) entlang der Bewegungsbahn unter Drehung der Produktgruppe (G) um eine zur Bewegungsbahn senkrechte Achse; und
Bereitstellen der Produktgruppe (G) an einer Übergabeposition für die nachgelagerte Verarbeitungseinrichtung, wobei die Stapelachse (X) der Produktgruppe (G) an der Übergabeposition senkrecht zur Bewegungsbahn ausgerichtet ist.

2. Verfahren nach Anspruch 1, wobei die Produkte (P) zumindest zwei flache, zueinander parallele Seiten aufweisen, vorzugsweise quaderförmig, noch bevorzugter würfelförmig sind und zwei der zumindest zwei flachen, zueinander parallelen Seiten bei der Bildung des Produktstaus in, bzw. entgegen der Bewegungsbahn ausgerichtet sind.

3. Verfahren nach einem der vorangehenden Ansprüche, wobei die Produkte (P) einer Produktgruppe (G) kontinuierlich und vorzugsweise lückenlos in gemeinsamer Anlage abgefördert, gefördert und bereitgestellt werden.

4. Verfahren nach einem der vorangehenden Ansprüche, wobei die Stapelachse (X) der Produktgruppe (G) an der Übergabeposition horizontal verläuft.

5. Verfahren nach einem der vorangehenden Ansprüche, wobei die Bewegungsbahn zumindest abschnittsweise kreisförmig verläuft, insbesondere stetig ineinander übergehende Teilkreise umfasst.

6. Verfahren nach einem der vorangehenden Ansprüche, wobei die Produktgruppe (G) mittels eines linearen Transportsystems und/oder eines Rotationskopfs abgefördert, gefördert und/oder bereitgestellt wird.

7. Verfahren zur Verpackung kleinstückiger Produkte (P), wie Brühtabletten, Süßwaren oder Waschmitteltabs, umfassend die Schritte:
Zuführen der Produkte (P) an eine nachgelagerte Verpackungseinrichtung unter Durchführung des Verfahrens nach einem der vorangehenden Ansprüche;
Abfördern der an der Übergabeposition bereitgestellten Produktgruppe (G) mittels der nachgelagerten Verpackungseinrichtung;
Verpacken der Produktgruppe (G), insbesondere unter Bildung eines Packmittelschlauchs um die Produktgruppe (G).

8. Vorrichtung zur Zuführung kleinstückiger Produkte (P), wie Brühtabletten, Süßwaren oder Waschmitteltabs, an eine nachgelagerte Verarbeitungseinrichtung, insbesondere Verpackungseinrichtung, vorzugsweise zur Durchführung des Verfahrens nach einem der Ansprüche 1 - 6, umfassend:
eine Fördereinrichtung (1) zur Bewegung der Produkte (P) entlang einer Bewegungsbahn unter Bildung eines Produktstaus entlang der Bewegungsbahn;
eine Entnahmeeinrichtung (2) zur Abförderung einer Produktgruppe (G) entlang der Bewegungsbahn, wobei die Produktgruppe (G) wenigstens zwei Produkte (P) umfasst, die entlang einer entlang der Bewegungsbahn ausgerichteten Stapelachse (X) gestapelt sind;
eine Dreheinrichtung (3) zur Förderung der Produktgruppe (G) entlang der Bewegungsbahn unter Drehung der Produktgruppe (G) um eine zur Bewegungsbahn senkrechte Achse und Bereitstellung der Produktgruppe (G) an einer Übergabeposition für die nachgelagerte Verarbeitungseinrichtung, so dass die Stapelachse (X) der Produktgruppe (G) senkrecht zur Bewegungsbahn ausgerichtet ist.

9. Vorrichtung nach Anspruch 8, wobei die Entnahmeeinrichtung (2) und die Dreheinrichtung (3) ein lineares Transportsystem und/oder zumindest einen Rotationskopf umfassen.

10. Vorrichtung nach Anspruch 8 oder 9, wobei die Entnahmeeinrichtung (2) Entnahmeorgane, vorzugsweise Greifer oder Greiferbackenpaare, umfasst, die eingerichtet sind, um jeweils zwei oder mehr Produkte (P) gemeinsam abzufördern, vorzugsweise unter Kompensation der jeweiligen Maßtoleranzen der gemeinsam abgeförderten Produkte (P), wobei die Entnahmeorgane vorzugsweise an einem Entnahme-Rotationskopf angeordnet sind.

11. Vorrichtung nach einem der Ansprüche 8 - 10, wobei die Dreheinrichtung (3) Drehorgane, vorzugsweise Greifer oder Greiferbackenpaare, umfasst, die eingerichtet sind, um jeweils die Produkte (P) der Produktgruppe (G) gemeinsam um die zur Bewegungsbahn senkrechte Achse zu drehen und der nachgelagerten Verarbeitungseinrichtung bereitzustellen, wobei die Drehorgane vorzugsweise an einem Dreh-Rotationskopf angeordnet sind.

12. System zur Verpackung kleinstückiger Produkte (P), wie Brühtabletten, Süßwaren oder Waschmitteltabs, zur Durchführung des Verfahrens nach Anspruch 7, umfassend:
die Vorrichtung nach einem der Ansprüche 8 - 11;
die nachgelagerte Verpackungseinrichtung zur Abförderung der an der Übergabeposition bereitgestellten Produktgruppe (G) und zur Verpackung der Produktgruppe (G), insbesondere unter Bildung eines Packmittelschlauchs um die Produktgruppe (G).
